# EUROPÄISCHE PATENTSCHRIFT

(11) **EP 3 543 611 B1**
(45) Veröffentlichungstag und Bekanntmachung des Hinweises auf die Patenterteilung: **07.04.2021**
(21) Anmeldenummer: 19159760.8
(22) Anmeldetag: 27.02.2019
(51) Int. Cl.: F24C 7/08, B60J 10/242, F25D 11/00, D06F 39/00, A47L 15/42, H05B 6/12

(54) **ELEKTRONIKGEHÄUSE FÜR HAUSHALTSGERÄTE MIT DICHTUNG**
ELECTRONICS HOUSING FOR HOUSEHOLD APPLIANCES WITH SEAL
BOÎTIER ÉLECTRONIQUE POUR APPAREILS ÉLECTROMÉNAGERS À JOINT D'ÉTANCHÉITÉ

(30) Priorität: 19.03.2018 DE 102018204114
(43) Veröffentlichungstag der Anmeldung: 25.09.2019
(73) Patentinhaber: BSH Hausgeräte GmbH, 81739 München (DE)
(72) Erfinder: Kojer, Mario, 83342 Tacherting (DE)

(56) Entgegenhaltungen:
- EP-A1- 2 290 292
- DE-A1- 3 503 314
- DE-A1- 4 434 054
- DE-A1-102006 024 739
- DE-A1-102013 220 304

## Beschreibung

Die Erfindung betrifft ein Elektronikgehäuse für Haushaltsgeräte, aufweisend mindestens eine umlaufende, elastisch nachgiebige Dichtung zum Abdichten des Elektronikgehäuses gegenüber mindestens einer Auflagefläche. Die Erfindung ist insbesondere vorteilhaft anwendbar auf Gargeräte, speziell Kochfelder.

DE 10 2006 024 739 A1 offenbart ein Haushaltsgerät, insbesondere einen Haushaltsofen, das mindestens eine Bedien- und/oder Anzeigeplatine aufweist, die in einem hierfür vorgesehenen Aufnahmebereich angeordnet ist, wobei die Bedien- und/oder Anzeigeplatine im montierten Zustand fest gegen ein weiteres Bauteil gedrückt wird. Um in kostengünstiger Weise einen guten Toleranzausgleich sicherzustellen und damit ein sicheres Anpressen der Bedien- und Anzeigeplatine an das weitere Bauteil zu gewährleisten, ist erfindungsgemäß vorgesehen, dass die Bedien- und/oder Anzeigeplatine in einer im Aufnahmebereich angeordneten Aufnahme positioniert ist, wobei die Aufnahme eine Anzahl Federelemente aufweist, die zur Auflage der Bedien- und/oder Anzeigeplatine mit ihrer von dem weiteren Bauteil abgewandten Seite ausgebildet und angeordnet sind.

EP 2 112 435 B1 offenbart ein Kochfeld mit elektrischen und/oder elektronischen Schaltkreisen und/oder berührungsempfindlichen Elementen, Folgendes umfassend: einen unteren Teil mit einer Bodenplatte und wenigstens zwei Seitenplatten, insbesondere mit vier Seitenplatten, wenigstens ein Gehäuse mit einem Bodenteil, einer außenumfänglichen Seitenwand und einer offenen Oberseite, wobei das wenigstens eine Gehäuse im unteren Teil des Kochfeldes angeordnet ist und wenigstens ein Teil der elektrischen und/ oder elektronischen Schaltkreise und/oder berührungsempfindlichen Elemente in dem wenigstens einen Gehäuse angeordnet ist, eine Glaskeramikplatte, welche die Oberseiten des wenigstens einen Gehäuses und des unteren Teils bedeckt, und eine Anzahl von Federelementen, die zwischen dem Bodenteil des wenigstens einen Gehäuses und der Bodenplatte des unteren Teils angeordnet sind, um eine Oberkante der Seitenwand gegen die Glaskeramikplatte zu drücken, wobei ein Dichtungsstreifen an der Bodenseite der Glaskeramikplatte angebracht ist und so an die Oberkante der Seitenwand des wenigstens einen Gehäuses angepasst ist, dass die Oberkante gegen den Dichtungsstreifen gedrückt wird, und das wenigstens eine Gehäuse wenigstens ein Befestigungselement umfasst, das mit einer Vertiefung in der wenigstens einen Seitenplatte des unteren Teils des Kochfelds verbunden ist, wobei das wenigstens eine Befestigungselement und die Vertiefung so vorgesehen sind, dass eine beschränkte vertikale Bewegung des wenigstens einen Gehäuses zwischen der Bodenplatte des unteren Teils und der Glaskeramikplatte möglich ist, und wobei das wenigstens eine Befestigungselement und die Vertiefung eine horizontale Bewegung des wenigstens einen Gehäuses im unteren Teil des Kochfeldes verhindern.

DE 10 2013 220 304 A1 offenbart ein Haushaltsgerät mit einem Gehäuse, das eine Elektroniktasche zur Aufnahme von Elektronikkomponenten des Haushaltsgeräts und einen Deckel zum Abdecken der Elektroniktasche aufweist, wobei die Elektroniktasche und der Deckel zerstörungsfrei unlösbar verbunden sind.

EP 2 290 292 A1 offenbart ein Kochfeld mit wenigstens einem Sichtfenster und wenigstens einer Steuereinheit, wobei die Steuereinheit unter dem Sichtfenster angebracht oder anbringbar ist und das Folgende umfasst: eine Vielzahl von Steuerelementen, die von einer Oberseite der Steuereinheit bedienbar sind, wenigstens eine Anzeige, die auf der Oberseite der Steuereinheit angeordnet ist, ein Bedienfeld, das einen unbeweglichen Teil der Steuereinheit bildet, und eine Anzahl von elastischen Elementen zur nachgiebigen Unterstützung der Anzeige auf der Steuereinheit, dadurch gekennzeichnet, dass die Steuereinheit einen Anzeigerahmen zum wenigstens teilweisen Umschließen der Anzeige umfasst, wobei der Anzeigerahmen als einstückiges Teil geformt ist und eine Dichtungslippe auf seiner Oberseite und die elastischen Elemente auf seiner Unterseite aufweist.

DE 35 033 14 A1 offenbart eine strangförmige Profildichtung aus elastischem Material für Fenster, Türen oder dgl. Dabei ist ein Fußbereich mit Haltelippen vorgesehen, der über einen Profilrücken mit einem sich anschließenden Kopfbereich verbunden ist. Dabei weist der Kopfbereich eine im unbelasteten Zustand der Profildichtung schräg nach der Seite des Fußbereiches hin vorspringende Dichtlippe auf. Im Endbereich der Dichtlippe und/oder an dem ihm gegenüberliegenden Bereich des Profilrückens ist ein in Richtung auf das jeweils andere Teil hin ausgerichteter Vorsprung derart vorgesehen, dass er bei Dichteingriff mit dem anderen Teil bzw. mit dem anderen Vorsprung, falls ein solcher vorhanden ist, in Druckanlage gelangt. An der Dichtlippe sind zwischen ihrem Endbereich und ihrer Einmündung am Profilrücken Luftdurchtrittsöffnungen vorgesehen.

Es ist die **Aufgabe** der vorliegenden Erfindung, die Nachteile des Standes der Technik zumindest teilweise zu überwinden und insbesondere eine besonders günstig umsetzbare Möglichkeit zur Dichtung eines Elektronikgehäuses in einem Haushaltsgerät, insbesondere Gargerät, bereitzustellen.

Diese Aufgabe wird gemäß den Merkmalen des unabhängigen Anspruchs gelöst. Vorteilhafte Ausführungsformen sind Gegenstand der abhängigen Ansprüche, der Beschreibung und der Zeichnungen, wobei der Schutzumfang durch die Ansprüche definiert ist.

Die Aufgabe wird gelöst durch ein Elektronikgehäuse für Haushaltsgeräte, aufweisend mindestens eine elastisch nachgiebige Dichtung zum Abdichten des Elektronikgehäuses gegenüber mindestens einer Auflagefläche, wobei das Elektronikgehäuse und die Dichtung aus dem gleichen Kunststoff bestehen und ferner das Elektronikgehäuse zwei zu entgegengesetzten Seiten hin offene Gehäusekammern aufweist und die Gehäusekammern jeweils eine umlaufende, elastisch nachgiebige Dichtung zum Abdichten gegenüber einer jeweiligen Auflagefläche aufweisen und ferner die Dichtung einer ersten Gehäusekammer der beiden Gehäusekammern an der Unterseite einer Glaskeramikplatte angedrückt aufliegt sowie mit der Dichtung einer zweiten Gehäusekammer der beiden Gehäusekammern an einem Abdeckblech angedrückt aufliegt.

Dadurch wird der Vorteil erreicht, dass das Elektronikgehäuse besonders einfach und preiswert herstellbar ist und besonders effektiv abdichtbar ist. Der Kunststoff ist insbesondere ein Thermoplast und kann z.B. PP, PPS, PMMA, ABS usw. sein oder aufweisen. Die zwei Gehäusekammern ermöglichen zudem vorteilhafterweise eine besonders vielfältige Nutzung des Elektronikgehäuses. Die Dichtungen an den entgegengesetzten Seiten können gleich oder unterschiedlich ausgebildet sein. Die beidseitige Andrückung ermöglicht außerdem eine besonders einfach herstellbare und montagetechnisch umsetzbare Anordnung und Abdichtung des Elektronikgehäuses.

Das Elektronikgehäuse dient zur Unterbringung mindestens einer Elektronik, z.B. einer Bedienelektronik, einer Relaiselektronik usw. Das Elektronikgehäuse kann dazu mindestens eine Gehäusekammer aufweisen.

Das Haushaltsgerät ist insbesondere ein Gargerät. Es ist eine Weiterbildung, dass das Gargerät ein Kochfeld ist oder ein Kochfeld aufweist (z.B. ein Herd ist). Das Haushaltsgerät kann zusätzlich oder alternativ ein Backofen, ein Dampfbehandlungsgerät, ein Mikrowellengerät oder eine beliebige Kombination daraus sein, z.B. ein Herd mit Dampfbehandlungs- und/oder Mikrowellenfunktion.

Dass das Elektronikgehäuse und die Dichtung aus dem gleichen Kunststoff bestehen, kann bedeuten, dass die Dichtung und das restliche Elektronikgehäuse aus dem gleichen Kunststoff bestehen. Dass das Elektronikgehäuse und die Dichtung aus dem gleichen Kunststoff bestehen, kann bedeuten, dass die Dichtung und zumindest ein an die Dichtung angrenzender Aufnahmebereich des Elektronikgehäuses, welcher die mindestens eine Gehäusekammer bildet oder begrenzt, aus dem gleichen Kunststoff bestehen. Der Aufnahmebereich kann auch als ein Grundkörper bezeichnet werden.

Es ist eine Ausgestaltung, dass das Elektronikgehäuse und die Dichtung einstückig hergestellt worden sind. So wird eine ganz besonders einfache und preiswerte Herstellung ermöglicht, insbesondere mittels eines Ein-Komponenten-Spritzgussverfahrens.

Alternativ kann die Dichtung an einen separat hergestellten Grundkörper des Elektronikgehäuses angespritzt sein.

Unter einer schräg vorstehenden Dichtlippe kann insbesondere eine Dichtlippe verstanden werden, die sich nicht senkrecht, sondern unter einem Winkel α mit 0° < α < 90° auf die vorgesehene Auflagefläche hin erstreckt. Dies kann auch so ausgedrückt werden, dass die Dichtlippe bei einem ersten Kontakt mit Auflagefläche nicht senkreckt oder parallel zu der Auflagefläche steht, sonders einen Winkel α mit 0° < α < 90° mit der Auflagefläche einschließt. Die Dichtlippe kann auch als Dichtwand oder Dichtsteg bezeichnet werden.

Es ist eine Weiterbildung, dass der Winkel α in einem Bereich 10° ≤ α ≤ 70°, insbesondere in einem Bereich 15° ≤ α ≤ 60°, insbesondere in einem Bereich 20° ≤ α ≤ 45°, insbesondere in einem Bereich 25° ≤ α ≤ 35°, insbesondere bei ca. 30° liegt.

Es ist eine Weiterbildung, dass eine Dicke d mindestens einer Dichtlippe nicht mehr als einen Millimeter beträgt, also d ≤ 1 mm gilt.

Es ist eine Weiterbildung, dass eine Länge I mindestens einer Dichtlippe bis zu einem Kontaktpunkt mit der Auflagefläche mindestens fünf Millimeter beträgt, also I ≥ 5 mm gilt.

Insbesondere eine Kombination dieser Maße, also eine Dichtlippe mit 20° ≤ α ≤ 45°, d ≤ 1 mm und I ≥ 5 mm ergibt den Vorteil, dass so eine mechanische Komprimierbarkeit der Dichtung ähnlich zu herkömmlich verwendeten Schaumdichtungen (z.B. "Scotch-Mount" der Fa. 3M) erreichbar ist.

Es ist eine Weiterbildung, dass die Dichtlippe eine im Querschnitt bandförmige Form aufweist. Die Dichtlippe kann insbesondere eine im unbelasteten Zustand bzw. vor Auflage an eine Auflagefläche im Querschnitt geradlinige oder gekrümmte Form aufweisen. Es ist eine Weiterbildung, dass die Dichtlippe in einem freien Rand endet.

Es ist eine Ausgestaltung, dass mindestens eine Dichtlippe als eine umlaufend geschlossene Dichtlippe ausgebildet ist. Dadurch wird ein Eindringen von Feuchtigkeit, Schmutzteilchen, heißer Luft usw. in das Elektronikgehäuse besonders effektiv verhindert. Unter einer umlaufend geschlossenen Dichtlippe kann insbesondere eine Dichtlippe verstanden werden, die entlang ihres Verlaufs keine Unterbrechung aufweist.

Es ist eine Ausgestaltung, dass mindestens eine umlaufende Dichtung zwei parallel nebeneinander angeordnete Dichtlippen aufweist. Dies verstärkt eine Dichtwirkung. Sind beide Dichtlippen schräg vorstehend ausgebildet, können sie in die gleiche Richtung oder in entgegengesetzte Richtungen verlaufen.

Es ist eine Ausgestaltung, dass die parallel nebeneinander angeordneten Dichtlippen jeweils Unterbrechungen aufweisen und die Unterbrechungen der unterschiedlichen Dichtlippen entlang der Dichtlippen gegeneinander versetzt sind. Diese Ausbildung ergibt den Vorteil, dass sie auch dann effektiv dichtend ist, wenn ein Längsverlauf der Dichtung mehrfach gekrümmt ist. Denn die Unterbrechungen ermöglichen es, dass verschiedene durch die Unterbrechungen voneinander getrennte Längsabschnitte der Dichtung sich unabhängig voneinander verformen können, um dort eine verbesserte Dichtwirkung zu erzielen. Zudem ergeben Unterbrechungen allgemein (also nicht nur bei einer Verwendung parallel nebeneinander angeordneten Dichtlippen) den Vorteil, dass sich dann das Elektronikgehäuse einfacher aus einem Werkzeug entformen lässt. Insbesondere vorteilhaft ist eine Anordnung der Unterbrechungen an Krümmung- oder Knickstellen. Dadurch, dass die Unterbrechungen der benachbarten Dichtlippen in Längsrichtung gegeneinander versetzt sind, wird ein direkter Durchtritt zwischen dem Innenraum des Elektronikgehäuses und seiner Umgebung verhindert. Zwar kann Luft zwischen dem Innenraum des Elektronikgehäuses und der Umgebung ausgetauscht werden, muss sich dazu aber zwischen den beiden Dichtlippen entlang bewegen. Dies verringert einen Luftstrom und behindert so ein Eindringen heißer Luft als auch von Schmutzteilchen usw. in den Innenraum des Elektronikgehäuses.

Es ist eine Ausgestaltung, dass das Elektronikgehäuse mindestens eine Kunststoff-Feder zur Auflage an mindestens einer Auflagefläche, die auch zur Auflage einer Dichtung vorgesehen ist, aufweist. So kann eine Aufsetzkraft des Elektronikgehäuses auf die Auflagefläche eingestellt werden. Die Kunststoff-Feder kann an dem Elektronikgehäuse angespritzt sein oder einstückig mit dem Elektronikgehäuse hergestellt worden sein. Die Kunststoff-Feder besteht vorteilhafterweise aus dem gleichen Kunststoff wie das Elektronikgehäuse und die Dichtung.

Es ist eine Ausgestaltung, dass das Gargerät ein Kochfeld ist und das Elektronikgehäuse mit einer umlaufenden, elastisch nachgiebigen Dichtung an einer Unterseite einer Glaskeramikplatte angedrückt aufliegt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines Kochfelds mit einem Elektronikgehäuse gemäß einem nicht die Erfindung zeigenden Ausführungsbeispiel;
- Fig.2: zeigt als Schnittdarstellung in Seitenansicht eine Skizze eines Kochfelds mit einem Elektronikgehäuse gemäß einem erfindungsgemäßen Ausführungsbeispiel;
- Fig.3: zeigt in Draufsicht von unten das Elektronikgehäuse gemäß dem erfindungsgemäßen Ausführungsbeispiel.

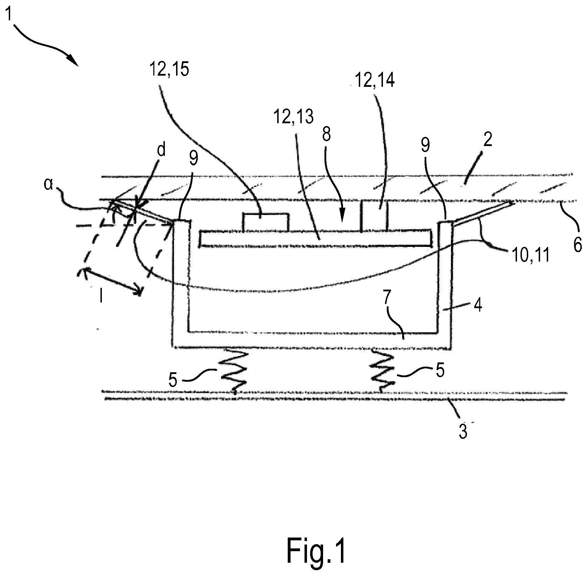

**Fig.1** zeigt ein Kochfeld 1 mit einer oberseitigen Kochfeldplatte 2 aus Glaskeramik. Das Kochfeld 1 kann ein eigenständiges Kochfeld oder einen Teil eines Herds darstellen. Unterhalb der Kochfeldplatte 2 befindet sich beabstandet ein Abdeckblech 3. Zwischen der Kochfeldplatte 2 und dem Abdeckblech 3 befindet sich ein Elektronikgehäuse 4, das rückseitig über Druckfedern 5 mit dem Abdeckblech 3 verbunden ist und vorderseitig durch die Druckfedern 5 an eine Unterseite 6 der Kochfeldplatte 2 gedrückt wird. Die ebene Unterseite 6 dient somit als Auflagefläche für das Elektronikgehäuse 4. Die Druckfedern 5 greifen an einem geschlossenen Boden 7 des Elektronikgehäuses 4 an, während die der Kochfeldplatte 2 zugewandte Vorderseite 8 offen ist.

Von einem der Unterseite 6 der Kochfeldplatte 2 zugewandten vorderen Rand 9 steht in Richtung der Kochfeldplatte 2 eine Dichtung 10 in Form einer Dichtlippe 11 schräg nach außen vor. Die Dichtung 10 dient zum Abdichten des Elektronikgehäuses 4 gegenüber der Kochfeldplatte 2. Die Dichtlippe 11 kann dazu umlaufend geschlossen sein. Insbesondere weist die Dichtlippe 11 hier eine im Querschnitt zumindest im Wesentlichen geradlinige Form zwischen dem Rand 9 und einem Kontaktbereich zu der Kochfeldplatte 2 auf.

Die Dichtlippe 11 besteht aus dem gleichen Kunststoff wie das restliche Elektronikgehäuse 4 und ist mit diesem vorteilhafterweise einstückig hergestellt worden, alternativ nachträglich angespritzt worden. Die Dichtung 10 bzw. die Dichtlippe 11 ist bei einer Bewegung des Elektronikgehäuses 4 in Richtung der Kochfeldplatte 2 elastisch nachgiebig. Um einen effektiven Kompromiss zwischen Formhaltung und Nachgiebigkeit zu erreichen, schleißt die Dichtlippe 11 im unbelasteten Zustand einen Winkel α mit ca. 30°, eine Dicke d von 1 mm oder weniger und eine Länge I von 5 mm oder mehr auf. Dies ergibt den Vorteil, dass so eine mechanische Komprimierbarkeit der Dichtlippe 11 ähnlich zu ansonsten herkömmlich verwendeten Schaumdichtungen erreichbar ist.

In dem Elektronikgehäuse 4 befindet sich eine Anzeigeelektronik 12 mit einer Anzeigeplatine 13, einer Taste 14 und einer Anzeigeeinrichtung 15. Im angedrückten Zustand kann die Taste 14 an der Unterseite 6 der Kochfeldplatte 2 aufliegen und als Anschlag dienen.

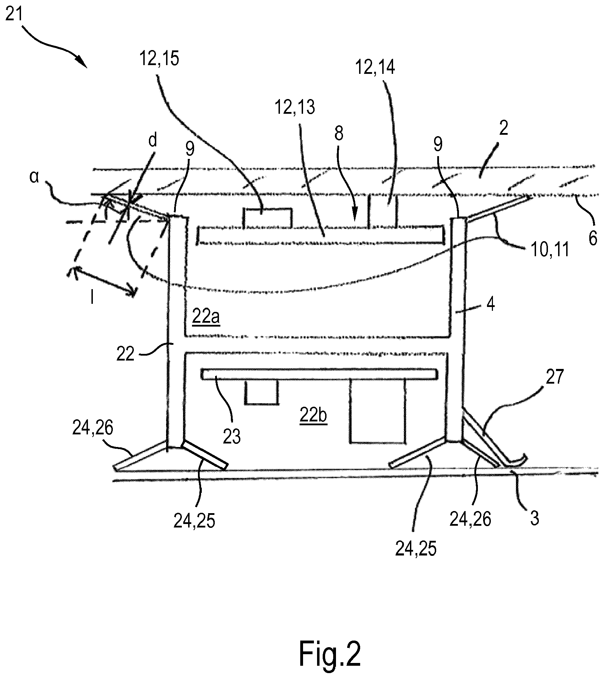

**Fig.2** zeigt als Schnittdarstellung in Seitenansicht eine Skizze eines Kochfelds 21 mit einem Elektronikgehäuse 22. Das Elektronikgehäuse 22 ist ähnlich zu dem Elektronikgehäuse 4 aufgebaut, weist aber nun zwei zu entgegengesetzten Seiten hin offene Gehäusekammern 22a, 22b auf, nämlich eine erste Gehäusekammer 22a, die zu der Kochfeldplatte 2 hin offen ist und eine zweite Gehäusekammer 22b, die zu dem Abdeckblech 3 hin offen ist. Während in der ersten Gehäusekammer 22a z.B. ähnlich zu dem Elektronikgehäuse 4 eine Anzeigeelektronik 12 untergebracht ist, kann in der zweiten Gehäusekammer 22b z.B. eine Relaisplatine 23 untergebracht sein.

Die erste Gehäusekammer 22a weist analog zu dem Elektronikgehäuse 4 eine Dichtung 10 mit einer Dichtlippe 11 auf. An der zweiten Gehäusekammer 22b ist eine elastisch nachgiebige Dichtung 24 zum Abdichten der Gehäusekammer 22b das Abdeckblech 3 vorhanden. Eine dem Elektronikgehäuse 4 zugewandte Seite des Abdeckblechs 3 dient folglich als Auflagefläche für die Dichtung 24.

Die Dichtung 24 weist zwei parallel nebeneinander angeordnete Dichtlippen 25, 26 auf, die jeweils in Richtung des Abdeckblechs 3 schräg vorstehen. Jede der Dichtlippen 25 und 26 kann ähnlich zu der Dichtlippe 11 ausgebildet sein, wobei die Dichtlippen 25 und 26 jedoch nun schräg voneinander wegweisend ("v-förmig") verlaufen.

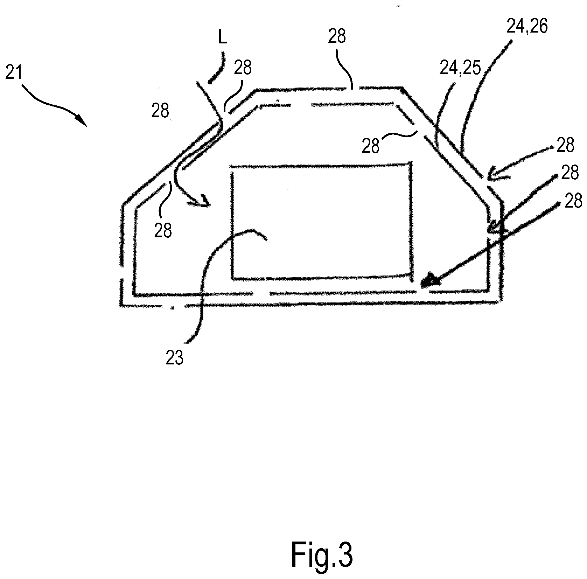

Die Druckfedern 5 sind nun nicht mehr vorhanden. Um dennoch einen ausreichend hohen Anpressdruck des Elektronikgehäuses 22 auf die Kochfeldplatte 2 zu erreichen, kann an dem Elektronikgehäuse 22 mindestens eine Kunststoff-Feder 27 zur Auflage an dem Abdeckblech 3 vorhanden sein. Die Kunststoff-Feder 27 kann z.B. einstückig mit dem Elektronikgehäuse 22 hergestellt worden sein, insbesondere aus dem gleichen Kunststoff. **Fig.3** zeigt das Elektronikgehäuse 22 in Draufsicht von unten. Die parallel nebeneinander angeordneten Dichtlippen 25, 26 sind nicht umlaufend geschlossen ausgebildet, sondern weisen jeweils Unterbrechungen 28 auf. Die Unterbrechungen 28 der beiden Dichtlippen 25 und 26 sind entlang der Dichtlippen 25, 26 gegeneinander versetzt angeordnet, so dass Luft L zwischen den beiden Dichtlippen 25, 26 strömen muss, um von außen in die zweite Gehäusekammer 22b zu gelangen. Ein so geführter Luftstrom weist jedoch einen nur geringen Volumenstrom auf, so dass warme und/oder feuchte Luft L nur schwer in die zweite Gehäusekammer 22b gelangen kann. Auch wird so verhindert, dass Strahlungswärme direkt von außen in die zweite Gehäusekammer 22b eingestrahlt wird.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

### Bezugszeichenliste

- 1: Kochfeld
- 2: Kochfeldplatte
- 3: Abdeckblech
- 4: Elektronikgehäuse
- 5: Druckfeder
- 6: Unterseite
- 7: Boden
- 8: Vorderseite
- 9: Vorderer Rand
- 10: Dichtung
- 11: Dichtlippe
- 12: Anzeigeelektronik
- 13: Anzeigeplatine
- 14: Taste
- 15: Anzeigeeinrichtung
- 21: Kochfeld
- 22: Elektronikgehäuse
- 22a: Erste Gehäusekammer
- 22b: Zweite Gehäusekammer
- 23: Relaisplatine
- 24: Dichtung
- 25: Dichtlippe
- 26: Dichtlippe
- 27: Kunststoff-Feder
- 28: Unterbrechung
- d: Dicke
- L: Luft
- I: Länge
- α: Winkel

## Patentansprüche

1. Elektronikgehäuse (4; 22) für Haushaltsgeräte (1; 21), aufweisend mindestens eine elastisch nachgiebige Dichtung (10; 10, 24) zum Abdichten des Elektronikgehäuses (4; 22) gegenüber mindestens einer für das Elektronikgehäuse vorgesehene Auflagefläche (3,6), wobei das Elektronikgehäuse (4; 22) und die Dichtung (10; 10, 24) aus dem gleichen Kunststoff bestehen, **dadurch gekennzeichnet, dass**
- das Elektronikgehäuse (22) zwei zu entgegengesetzten Seiten hin offene Gehäusekammern (22a, 22b) aufweist und die Gehäusekammern (22a, 22b) jeweils eine umlaufende, elastisch nachgiebige Dichtung (10, 24) zum Abdichten gegenüber der jeweiligen Auflagefläche (6, 3) aufweisen und
- die Dichtung (10) einer ersten Gehäusekammer (22a) der beiden Gehäusekammern (22a, 22b) an der Unterseite (6) einer Glaskeramikplatte (2) angedrückt aufliegt und mit der Dichtung (24) einer zweiten Gehäusekammer (22b) der beiden Gehäusekammern (22a, 22b) an der als Abdeckblech (3) ausgebildeten Auflagefläche (3) angedrückt aufliegt.

2. Elektronikgehäuse (4; 22) nach Anspruch 1, wobei das Elektronikgehäuse (4; 22) und die Dichtung (10; 10, 24) einstückig hergestellt worden sind.

3. Elektronikgehäuse (4; 22) nach einem der vorhergehenden Ansprüche, wobei mindestens eine Dichtung (10; 10, 24) in Form mindestens einer in Richtung der vorgesehenen Auflagefläche (6; 3, 6) schräg vorstehenden Dichtlippe (11; 25, 26) ausgebildet ist.

4. Elektronikgehäuse (4; 22) nach einem der vorhergehenden Ansprüche, **dadurch gekennzeichnet, dass** mindestens eine Dichtung (10) mindestens eine umlaufend geschlossene Dichtlippe (11) aufweist.

5. Elektronikgehäuse (22) nach einem der vorhergehenden Ansprüche, **dadurch gekennzeichnet, dass** mindestens eine Dichtung (24) zwei parallel nebeneinander angeordnete Dichtlippen (25, 26) aufweist.

6. Elektronikgehäuse (22) nach Anspruch 5, wobei die parallel nebeneinander angeordneten Dichtlippen (25, 26) jeweils Unterbrechungen (28) aufweisen, und die Unterbrechungen (28) der unterschiedlichen Dichtlippen (25, 26) entlang der Dichtlippen (25, 26) gegeneinander versetzt sind.

7. Elektronikgehäuse (22) nach einem der vorhergehenden Ansprüche, wobei das Elektronikgehäuse (22) mindestens eine Kunststoff-Feder (27) zur Auflage an mindestens einer Auflage (3) aufweist.

## Claims

1. Electronics housing (4; 22) for household appliances (1; 21), having at least one elastically flexible seal (10; 10, 24) for sealing the electronics housing (4; 22) with respect to at least one support surface (3, 6) provided for the electronics housing, wherein the electronics housing (4; 22) and the seal (10; 10, 24) consist of the same plastic, **characterised in that**
- the electronics housing (22) has two housing chambers (22a, 22b) which open toward two opposing sides and the housing chambers (22a, 22b) each have a peripheral, elastically flexible seal (10, 24) for sealing with respect to the respective support surface (6, 3) and
- the seal (10) of a first housing chamber (22a) of the two housing chambers (22a, 22b) rests pressed against the lower side (6) of a glass ceramic plate (2) and rests with the seal (24) of a second housing chamber (22b) of the two housing chambers (22a, 22b) pressed against the support surface (3) embodied as a cover plate (3).

2. Electronics housing (4; 22) according to claim 1, wherein the electronics housing (4; 22) and the seal (10; 10, 24) have been manufactured in one piece.

3. Electronics housing (4; 22) according to one of the preceding claims, wherein at least one seal (10; 10, 24) is embodied in the form of at least one sealing lip (11; 25, 26) which projects obliquely in the direction of the provided support surface (6; 3, 6).

4. Electronics housing (4; 22) according to one of the preceding claims, **characterised in that** at least one seal (10) has at least one peripherally closed sealing lip (11).

5. Electronics housing (22) according to one of the preceding claims, **characterised in that** at least one seal (24) has two sealing lips (25, 26) arranged adjacent to one another in parallel.

6. Electronics housing (22) according to claim 5, wherein the sealing lips (25, 26) arranged adjacent to one another in parallel each have gaps (28), and the gaps (28) in the different sealing lips (25, 26) are offset against one another along the sealing lips (25, 26).

7. Electronics housing (22) according to one of the preceding claims, wherein the electronics housing (22) has at least one plastic spring (27) for support on at least one support (3).

## Revendications

1. Boîtier électronique (4 ; 22) pour appareils ménagers (1 ; 21), présentant au moins un joint (10 ; 10, 24) élastiquement souple destiné à étanchéifier le boîtier électronique (4 ; 22) par rapport à au moins une surface d'appui (3, 6) ménagée pour le boîtier électronique, dans lequel le boîtier électronique (4 ; 22) et le joint (10 ; 10, 24) sont constitués de la même matière plastique, **caractérisé en ce que**
- le boîtier électronique (22) comprend deux chambres de boîtier (22a, 22b) ouvertes vers des côtés opposés, et **en ce que** les chambres de boîtier (22a, 22b) comprennent respectivement un joint (10, 24) périphérique élastiquement souple destiné à étanchéifier par rapport à la surface d'appui (6, 3) respective, et **en ce que**
- le joint (10) d'une première chambre de boîtier (22a) des deux chambres de boîtier (22a, 22b) repose en étant pressé sur le côté inférieur (6) d'une plaque en verre céramique (2) et, avec le joint (24) d'une deuxième chambre de boîtier (22b) des deux chambres de boîtier (22a, 22b), repose en étant pressé sur la surface d'appui (3) réalisée comme tôle de recouvrement (3).

2. Boîtier électronique (4 ; 22) selon la revendication 1, dans lequel le boîtier électronique (4 ; 22) et le joint (10 ; 10, 24) ont été fabriqués d'une seule pièce.

3. Boîtier électronique (4 ; 22) selon l'une quelconque des revendications précédentes, dans lequel au moins un joint (10 ; 10, 24) est réalisé sous forme d'au moins une lèvre d'étanchéité (11 ; 25, 26) faisant obliquement saillie en direction de la surface d'appui (6 ; 3, 6) ménagée.

4. Boîtier électronique (4 ; 22) selon l'une quelconque des revendications précédentes, **caractérisé en ce qu'**au moins un joint (10) comprend au moins une lèvre d'étanchéité (11) périphériquement fermée.

5. Boîtier électronique (22) selon l'une quelconque des revendications précédentes, **caractérisé en ce qu'**au moins un joint (10) comprend deux lèvres d'étanchéité (25, 26) disposées parallèlement l'une à côté de l'autre.

6. Boîtier électronique (22) selon la revendication 5, dans lequel les lèvres d'étanchéité (25, 26) disposées parallèlement l'une à côté de l'autre présentent respectivement des ouvertures (28), et dans lequel les ouvertures (28) des différentes lèvres d'étanchéité (25, 26) sont décalées les unes par rapport aux autres le long des lèvres d'étanchéité (25, 26).

7. Boîtier électronique (22) selon l'une quelconque des revendications précédentes, dans lequel le boîtier électronique (22) comprend au moins un ressort (27) en matière plastique pour l'appui sur au moins un support (3).
